# FASCICULE DE BREVET EUROPEEN

(11) **EP 3 519 264 B1**
(45) Date de publication et mention de la délivrance du brevet: **01.12.2021**
(21) Numéro de dépôt: 17754381.6
(22) Date de dépôt: 24.08.2017
(51) Int. Cl.: B60S 1/52, B60S 1/56, G02B 27/00

(54) **SYSTEME DE DETECTION POUR VEHICULE AUTOMOBILE**
ERKENNUNGSSYSTEM FÜR EIN KRAFTFAHRZEUG
DETECTION SYSTEM FOR A MOTOR VEHICLE

(30) Priorité: 28.09.2016 FR 1659244
(43) Date de publication de la demande: 07.08.2019
(73) Titulaire: Valeo Systèmes d'Essuyage, 78322 Le Mesnil Saint Denis (FR)
(72) Inventeur: BAUDOUIN, Maxime, 63500 Issoire (FR); GRASSO, Giuseppe, 63500 Issoire (FR); KOLANOWSKI, Grégory, 63500 Issoire (FR); PASSERIEUX, Thibaud, 63500 Issoire (FR); PICOT, Philippe, 63500 Issoire (FR); VIEILLE, Jordan, 63500 Issoire (FR)
(74) Mandataire: Valeo Visibility
(86) Numéro de dépôt international: PCT/EP2017/071304
(87) Numéro de publication internationale: WO 2018/059841

(56) Documents cités:
- WO-A1-2016/074933
- WO-A1-2016/116568
- US-A1- 2013 048 036
- US-A1- 2016 101 735

## Description

La présente invention se rapporte au domaine des systèmes de détection destinés à équiper un véhicule automobile. Elle concerne plus particulièrement un dispositif de nettoyage d'un tel système de détection.

Le document WO 2016/074933 A1 divulgue un système de détection selon le préambule de la revendication indépendante 1.

Les systèmes de détection qui équipent désormais un grand nombre de véhicule automobile ont pour fonction de recueillir des informations sur l'environnement du véhicule automobile, afin notamment de fournir au conducteur une aide à la conduite et/ou à la manœuvre de ce véhicule. A cette fin, le système de détection est couramment installé sur le véhicule de manière à collecter des informations sur l'environnement frontal, sur l'environnement arrière ou sur l'environnement latéral du véhicule : le système de détection est donc par exemple installé en face avant et/ou en face arrière et/ou sur un rétroviseur du véhicule.

De telles localisations sont toutefois particulièrement exposées aux salissures telles qu'eau sale, poussières ou autres types de projections. Or de telles salissures forment un obstacle à l'émission et à la réception des informations et peuvent perturber le fonctionnement du système de détection, voire rendre ce fonctionnement impossible.

Plus récemment, on cherche à équiper les véhicules automobiles de systèmes de détection qui ciblent la scène de route devant le véhicule pour analyser si des obstacles risquent d'être accidentogènes et pour prévoir les manœuvres d'évitement et/ou de freinage d'urgence à prévoir en conséquence. L'impératif de propreté de la surface optique de ces systèmes de détection est le même que celui précédemment décrit.

Les surfaces optiques des capteurs de tels systèmes de détection sont généralement de forme complexe, en présentant notamment une zone d'émission d'un signal de détection et une zone de réception de ce signal. Il en résulte des dimensions plus importantes que celles d'une lentille de caméra par exemple, et des dimensions du dispositif de nettoyage associé qui évoluent en conséquence.

Dans le cadre de la présente invention, on appelle capteur optique tout capteur, tels que caméra, capteur laser ou autre, basé sur l'émission et/ou la détection d'un rayonnement électromagnétique, notamment dans le spectre visible ou invisible pour l'homme, en particulier l'infrarouge. On appelle surface optique une surface au moins en partie transparente à un tel rayonnement.

De tels dispositifs de nettoyage peuvent comporter notamment une rampe de distribution munie d'une pluralité d'orifices de distribution desquels sort du fluide sur tout ou partie de la dimension de la surface optique à nettoyer. Cette rampe peut être disposée en bout d'un corps d'acheminement de fluide(s) de nettoyage et/ou de séchage qui est raccordé, à son extrémité amont, à un ensemble de stockage de(s) fluide(s).

La forme et la dimension de la rampe peuvent varier en fonction de la surface optique à nettoyer. On pourra ainsi prévoir une rampe plus ou moins longue pour fournir un nombre approprié d'orifices de distribution, et/ou prévoir une rampe plus ou moins droite afin de s'adapter la courbure de la surface optique.

La présente invention s'inscrit dans ce contexte de nettoyage de capteur optique par l'intermédiaire de rampe de distribution et elle a pour objet un système de détection destiné à équiper un véhicule automobile, ce système de détection comprenant au moins un capteur optique délimité par au moins une surface optique dont la forme et l'orientation définissent un champ de détection dudit capteur optique. Le système de détection selon l'invention comprend également au moins un dispositif de nettoyage de cette surface optique, ce dispositif de nettoyage comportant notamment une rampe de distribution d'au moins un fluide de nettoyage et/ou de séchage. Dans le système de détection selon l'invention, cette rampe de distribution est mobile, par rapport à la surface optique, entre une première position dite de repos dans laquelle elle ne distribue aucun fluide et une seconde position dite de déploiement extrême. Selon l'invention, en chaque position de son déplacement entre la première et la seconde position, la rampe de distribution se situe à l'extérieur du champ de détection du capteur optique.

Avantageusement, la rampe de distribution est disposée à une extrémité d'un corps d'acheminement d'un ou plusieurs fluides de nettoyage et/ou de séchage du dispositif de nettoyage du système de détection. Ce corps d'acheminement présente avantageusement une forme allongée selon un axe d'allongement longitudinal. Selon l'invention, la direction selon laquelle s'effectue le déplacement de la rampe de distribution entre sa première position (ou position de repos) et sa seconde position est avantageusement sensiblement parallèle à la direction de l'axe d'allongement du corps d'acheminement du dispositif de nettoyage.

Selon une caractéristique de l'invention, la rampe de distribution présente une pluralité d'orifices de distribution de fluide, configurés pour permettre la projection d'un ou plusieurs fluides de nettoyage et/ou de séchage sur la surface optique du capteur optique. Avantageusement, ces orifices de distribution sont agencés de sorte à déboucher d'une part sur l'extérieur de la rampe et d'autre part dans un canal de distribution configuré au sein de la rampe de distribution. Par ailleurs, ces orifices de distribution s'étendent de part et d'autre de l'axe d'allongement du corps d'acheminement à l'extrémité duquel la rampe de distribution est disposée, selon une direction sensiblement perpendiculaire à celle de cet axe d'allongement. Plus particulièrement, on pourra prévoir que la rampe de distribution présente un plan de symétrie axiale comportant l'axe d'allongement du corps d'acheminement. Et on pourra prévoir de disposer la rampe de distribution et le dispositif e nettoyage dans son ensemble de sorte que le plan de symétrie axiale de la rampe de distribution est confondu avec le plan de symétrie axiale de la surface optique.

La rampe de distribution comporte une première portion d'extrémité par laquelle elle est rattachée au corps d'acheminement, et une deuxième portion dans laquelle sont agencés le canal de distribution et les orifices de distribution.

Selon l'invention, lorsque la rampe de distribution se trouve dans sa une première position, et comme il a été indiqué précédemment, elle se situe à l'extérieur du champ de détection du capteur optique. Dans cette première position, dite de repos, toutefois, aucun fluide de nettoyage et/ou de séchage n'est distribué par les orifices de distribution agencés en son sein. La distribution de tels fluides n'est autorisée, selon l'invention, que lorsque la rampe de distribution se trouve entre une position intermédiaire, c'est-à-dire une position située entre la première position et une deuxième position. La deuxième position correspond en particulier à une position de déploiement extrême dans laquelle la distribution de fluide est notamment également autorisée. Ceci est, par exemple, possible, par la mise en œuvre d'un ou plusieurs pistons télescopiques porteurs de cette rampe de distribution, munis d'un ou plusieurs joints d'étanchéité et configurés pour coulisser, lors des déplacements de la rampe de distribution, à l'intérieur d'un canal d'alimentation de telle manière que, en fonction de leur position relative par rapport à la portion du canal d'alimentation dans laquelle ils coulissent, les joints qu'ils portent obturent ou non de manière étanche ce canal, permettant ainsi ou non le passage de fluide et son acheminement jusqu'à la rampe de distribution et aux orifices de distribution agencés en son sein. Avantageusement, ces pistons et joints sont configurés pour autoriser le passage de fluide dès lors que la rampe de distribution se déplace vers une seconde intermédiaire, position de repos exclue. Selon différentes variantes de réalisation, ces pistons et joints peuvent être configurés pour autoriser le passage de fluide à partir d'une position relative prédéfinie de la rampe de distribution et de la surface optique.

En d'autres termes, le dispositif de nettoyage du système de détection selon l'invention comporte une rampe de distribution télescopique configurée pour ne projeter aucun fluide lorsqu'elle est dans sa première position, ou position de repos, et pour projeter du fluide sur la surface optique dès lors qu'elle se déplace à partir de cette première position ou dès lors qu'elle atteint, dans son déplacement entre sa première position et sa deuxième position de déploiement extrême, une position intermédiaire prédéfinie.

Selon une autre de ses caractéristiques, l'invention prévoit qu'entre la première position et la seconde position, la rampe de distribution se déplace dans une direction sensiblement parallèle à l'axe optique de la surface optique, notamment en s'éloignant de cette dernière.

Selon un mode de réalisation particulier de l'invention, la rampe de distribution est courbe. Ce mode de réalisation est particulièrement avantageux dans le cas où le capteur optique mis en œuvre dans le système de détection présente une surface optique courbe : c'est le cas, à titre d'exemple non exclusif, lorsque le capteur mis en œuvre dans le système de détection est un capteur laser. Dans un tel cas, l'invention prévoit que la courbure de la rampe de distribution soit égale, ou sensiblement égale, à la courbure de la surface optique du capteur.

Plus précisément, dans le cas où la surface optique présente une forme générale sensiblement cylindrique, l'invention prévoit que la rampe de distribution présente également une courbure d'enveloppe sensiblement cylindrique dont les génératrices sont sensiblement parallèles aux génératrices de la forme courbe de la surface optique.

Selon une caractéristique de l'invention, la surface extérieure du capteur comporte au moins une première portion émettrice, à travers laquelle un signal sortant est émis, et/ou au moins une deuxième portion réceptrice, à travers laquelle un signal entrant est reçu. Par exemple, le signal entrant est formé du signal sortant renvoyé par l'environnement du véhicule : c'est le cas, notamment, lorsque le capteur mis en œuvre dans le système de détection est un capteur optique, notamment un laser tel qu'un laser lidar ou analogue.

Ainsi, on peut prévoir un capteur ne comportant qu'une portion émettrice ou ne comportant qu'une portion réceptrice, le système de détection optique comportant alors au moins deux capteurs de types différents pour réaliser respectivement les fonctions d'émission et de réception, ou bien prévoir un capteur qui comporte ces deux portions émettrice et réceptrice.

Dans ce dernier cas, la portion émettrice et la portion réceptrice peuvent former ainsi une seule et même surface optique continue, ou elles peuvent former des zones distinctes et concourantes, formant ainsi une surface optique comportant, par exemple, un premier bandeau et un deuxième bandeau d'inclinaison différentes, partageant notamment entre eux un bord commun.

Lorsque la portion émettrice et la portion réceptrice forment une seule et même surface optique continue, l'invention prévoit que la rampe de distribution présente une courbure égale à la courbure générale de la surface optique continue. Lorsque la surface optique se présente en une portion émettrice et une portion réceptrice formant des zones distinctes et concourantes, l'invention peut prévoir que la rampe de distribution présente une enveloppe courbe dont la courbure, selon différentes variantes de réalisation, est égale à la courbure de la portion émettrice, ou égale à la courbure de la portion réceptrice, ou égales à la courbure moyenne définie à partir des formes courbes respectivement de la portion émettrice et de la portion réceptrice. Il est à noter que dans ce cas, la propreté de la portion émettrice étant un point clé de l'efficacité du système de détection, il pourra être avantageux que la rampe de distribution présente une forme courbe dont la courbure est égale à celle de la forme courbe de ladite portion émettrice.

Avantageusement, qu'elle soit de forme courbe ou non, la rampe de distribution, et notamment sa deuxième portion dans laquelle sont agencés le canal et les orifices de distribution, forme avec la surface optique du capteur optique, lorsqu'elle se trouve dans sa première position (ou position de repos), une surface sensiblement continue.

Avantageusement, l'invention prévoit que la rampe de distribution soit placée, par rapport à la surface optique et au champ de détection de celle-ci, sur un côté de cette surface optique , notamment disposé dans un plan parallèle au plan dans lequel s'inscrit la courbure de la rampe de distribution.

Avantageusement, le corps d'acheminement est fixé sur un boîtier de réception du capteur optique. La rampe de distribution est donc avantageusement reliée, par le corps d'acheminement auquel elle est rattachée, à un tel boîtier. Plus généralement, l'invention prévoit que le corps d'acheminement présente une position relative stable par rapport à la surface optique. En d'autres termes, le corps d'acheminement et la rampe de distribution sont avantageusement agencés selon une orientation préfinie au regard de la surface optique à nettoyer.

Selon des caractéristiques particulières de l'invention, lorsque la surface optique comporte une portion émettrice et une portion réceptrice, le corps d'acheminement est fixé sur une face de réception du boîtier et cette face de réception s'étend à partir d'un bord de la portion émettrice. La rampe de distribution, dans sa première position, est située au voisinage de l'au moins une portion émettrice. De la sorte, on s'assure que les premiers jets de fluide sur la surface du capteur optique sont dirigés directement sur la portion émettrice, qui représente la portion du capteur pour laquelle il s'agit de s'assurer d'un nettoyage optimal.

D'autres caractéristiques, détails et avantages de l'invention et de son fonctionnement ressortiront plus clairement à la lecture de la description donnée ci-après à titre indicatif, en relation avec les figures annexées, dans lesquelles :
- les figures 1a à 1c sont des vues schématiques générales illustrant respectivement le principe de fonctionnement d'un système de détection d'un type plus particulièrement visé par l'invention, les différentes utilisations d'un tel système pour la détection de personnes, objets ou véhicules tiers sur la scène de route, et un exemple d'implantation d'un tel système dans un véhicule automobile ;
- la figure 2 est une vue schématique en perspective d'un système de détection selon l'invention dans lequel la rampe de distribution du dispositif de nettoyage est dans sa première position, ou position de repos,
- la figure 3 est une vue schématique en coupe d'un système de détection selon l'invention, dans lequel la rampe de distribution du dispositif de nettoyage est dans sa première position, ou position de repos,
- la figure 4 est une vue schématique en coupe d'un système de détection selon l'invention, dans lequel la rampe de distribution du dispositif de nettoyage est dans une position intermédiaire entre la première position de la figure 3 et une seconde position,
- la figure 5 est une vue schématique en coupe d'un système de détection selon l'invention, dans lequel la rampe de distribution du dispositif de nettoyage est dans sa seconde position,
- la figure 6 est une vue de dessus du système de détection de la figure 2,
- et la figure 7 est une vue schématique en perspective d'un système de détection selon l'invention dans lequel la rampe de distribution du dispositif de nettoyage est dans sa seconde position.

Il est tout d'abord à noter que si les figures exposent l'invention de manière détaillée pour sa mise en œuvre, elles peuvent bien entendu servir à mieux définir l'invention le cas échéant. De même, il est rappelé que, pour l'ensemble des figures, les mêmes éléments sont désignés par les mêmes repères.

Il est également rappelé que, dans la description qui suit, les dénominations "amont" et "aval" se réfèrent à la direction d'écoulement des fluides de nettoyage et de séchage dans le dispositif de nettoyage du système de détection selon l'invention. Ainsi, la dénomination "amont" se réfère au côté du dispositif de nettoyage par lequel ces fluides de nettoyage et de séchage sont admis en son sein, et la dénomination "aval" se réfère au côté du dispositif de nettoyage par lequel les fluides de nettoyage et de séchage sont distribués à l'extérieur de celui-ci, vers une surface optique d'un système de détection d'un véhicule automobile.

L'ensemble des figures illustre un mode particulièrement avantageux de réalisation d'un système de détection 1 selon l'invention. Selon ce mode de réalisation, le système de détection 1 est notamment délimité par une surface optique 20 d'un capteur optique 2 qu'il comporte. La surface optique comporte au moins une portion émettrice et au moins une portion réceptrice. Dans l'exemple illustré, la surface optique 20 présente deux portions distinctes à savoir une première portion émettrice 201 et une deuxième portion réceptrice 202. La portion émettrice 201 et la portion réceptrice 202 de la surface optique 20 sont ici courbes et présentent chacune une surface d'enveloppe sensiblement cylindrique. Les portions émettrice 201 et réceptrice 202 sont ici distinctes et concourantes, de telle manière que la surface optique 20 est formée d'un premier bandeau correspondant à la portion émettrice 201 et d'un deuxième bandeau correspondant à la portion réceptrice 202. Ces deux bandeaux partagent un bord 203 commun.

Selon ce mode de réalisation de l'invention, le système de détection 1 présente un plan axial de symétrie P1 passant par les axes de courbure de la portion émettrice 201 et de la portion réceptrice 202. Le bord commun 203 entre la portion émettrice 201 et la portion réceptrice 202 coupe en particulier perpendiculairement le plan axial de symétrie P1. Les formes et les dimensions respectivement de la portion émettrice 201 et de la portion réceptrice 202 ou, plus généralement, de la surface optique 20, définissent un champ de détection 21 du capteur optique 2. Ce champ de détection 21 est défini comme l'angle solide dans lequel un objet A pourra être atteint par le signal sortant 7 émis par la portion émettrice 201 de telle manière que le signal entrant 8 renvoyé par ledit objet A sera reçu par la portion réceptrice 202 de la surface optique 20.

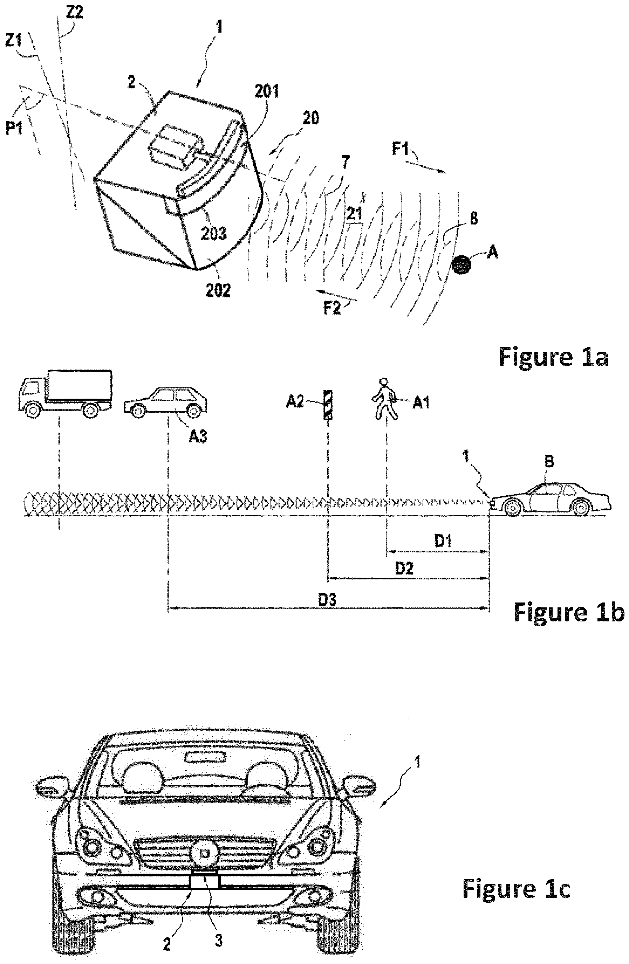

La figure 1a illustre le fonctionnement d'un tel système de détection 1 et la figure 1b associée illustre ses diverses possibilités d'utilisation. Un signal optique sortant 7, illustré par les formes concentriques en traits pleins sur la figure 1, est émis par la portion émettrice 201, selon la direction générale représentée par la flèche F1. Lorsque ce signal rencontre un objet A placé sur son trajet, il est renvoyé, par cet objet A, en un signal optique 8 entrant, illustré par les formes concentriques en traits pointillés sur la figure 1. Ce signal optique entrant 8 est renvoyé, selon la direction générale représenté par la flèche F2, vers la partie réceptrice 202 du système de détection 1. Le signal sortant 7 et le signal entrant 8 sont ensuite comparés par des moyens d'analyse configurés dans le système de détection 1 pour en déduire une information concernant la forme et la position de l'objet A.

Ainsi, comme le montre la figure 1a, un tel système de détection 1, par exemple placé à l'avant d'un véhicule B, pourra fournir au conducteur dudit véhicule B une information relative à la fois, par exemple, à la nature et à la distance qui sépare le véhicule B de différents types d'objets situés dans le champ de détection 21 du capteur optique 2 : piéton A1 situé à une distance D1 du véhicule B, élément de signalisation routière A2 situé à une distance D2, autre(s) véhicule(s) A3 situé(s) à une distance D3, etc ...

Par ailleurs, on a illustré sur la figure 1c une vue d'un véhicule automobile sur lequel est installé un tel ensemble de détection à capteur optique 1, notamment ici dans la face avant, ce qui permet la détection d'obstacle sur la scène de route en avant du véhicule tel qu'illustrée sur la figure 1b.

On comprend aisément que la qualité des signaux sortant 7 et entrant 8 est primordiale pour un fonctionnement correct et fiable du système de détection 1. La propreté de la portion émettrice 201 et de la portion réceptrice 202 est, notamment, un élément clé de la qualité des signaux émis et/ou reçus par la surface optique 20. Il est donc capital de disposer d'un dispositif de nettoyage 3 qui permette de maintenir propres la portion émettrice 201 et la portion réceptrice 202 de la surface optique 20 ou, plus généralement, la surface optique 20, sur l'ensemble du champ de détection 21 du capteur optique 2.

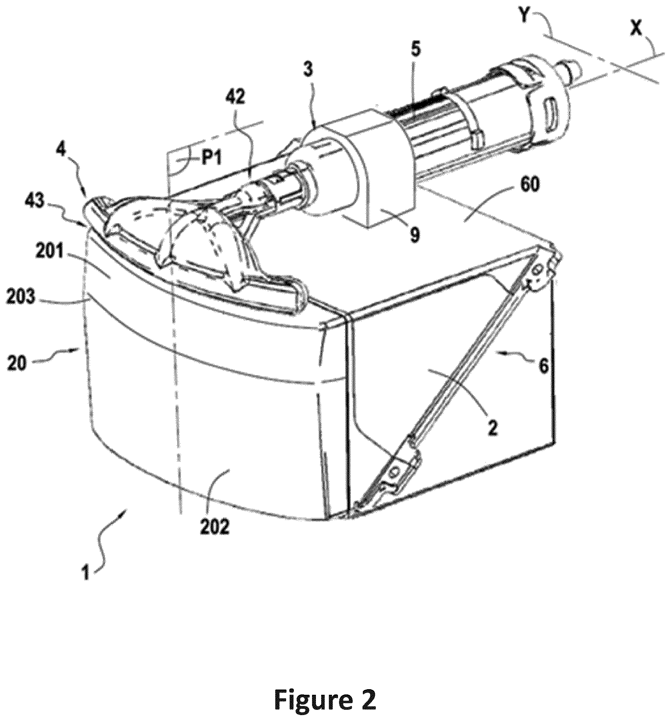

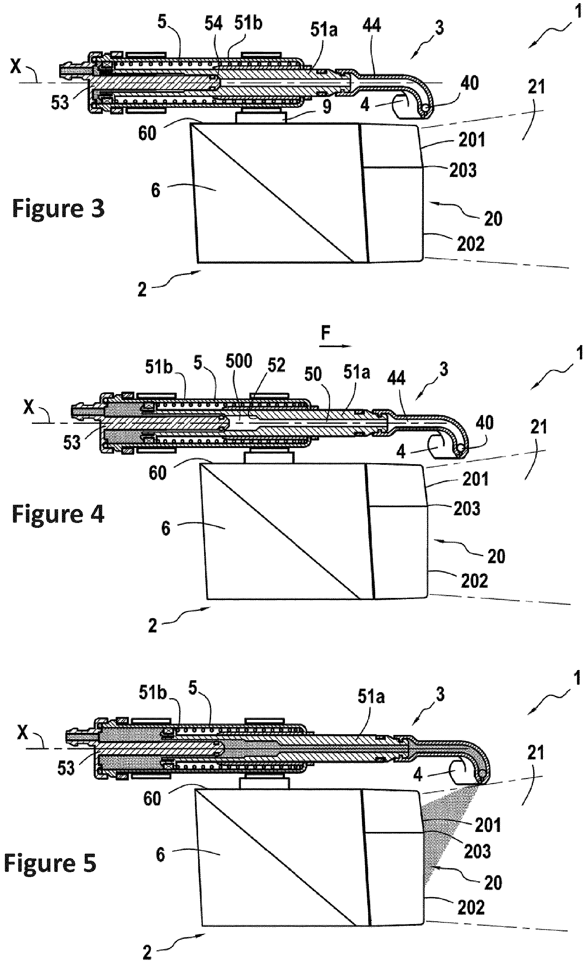

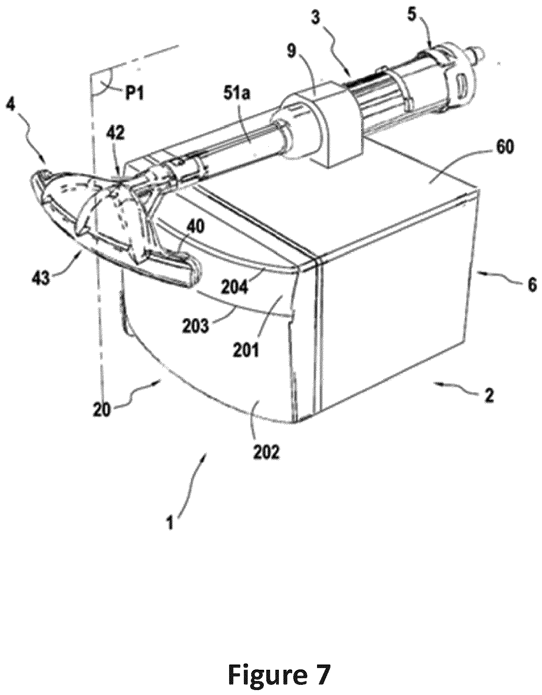

Un tel dispositif de nettoyage 3 est illustré par les figures 2 à 7. En référence à ces figures, le dispositif de nettoyage 3 comporte une rampe de distribution 4 configurée pour permettre la projection d'un ou plusieurs fluides de nettoyage et/ou de séchage sur la surface optique 20 à nettoyer. A cette fin, et comme le montrent les figures 3, 4 et 5, la rampe de distribution 4 comporte par exemple au moins un canal de distribution 40 dans lequel sont agencés une pluralité d'orifices de distribution 41 par lesquels le ou les fluides de nettoyage et/ou de séchage sont projetés sur la surface optique 20. Dans le système de détection 1 selon l'invention, la rampe de distribution 4 est mobile entre une première position, ou position de repos, plus particulièrement illustrée par les figures 2, 3, et 6 et une seconde position, ou position de déploiement extrême, plus particulièrement illustrée par les figures 5 et 7, une position intermédiaire entre ces deux positions étant illustrée sur la figure 4.

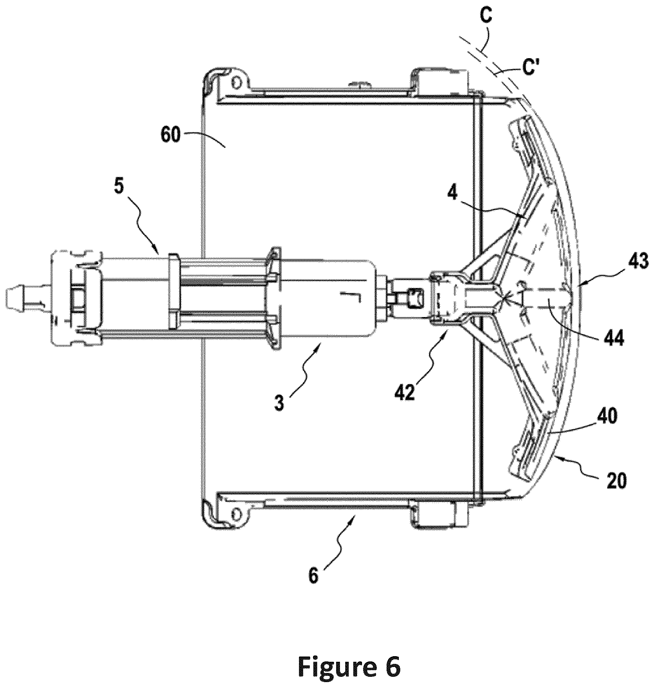

Selon le mode de réalisation de l'invention illustré par les figures, la rampe de distribution 4 est courbe. Plus précisément, et tel que cela est particulièrement visible sur la figure 6, la rampe de distribution 4 présente une courbure C' sensiblement égale à la courbure C de la surface optique 20. Selon le mode de réalisation de l'invention plus particulièrement illustré par les figures, la surface optique 20 présentant des courbures différentes en sa portion émettrice 201 et en sa portion réceptrice 202, la rampe de distribution 4 présente une courbure sensiblement égale à celle de la portion émettrice 201, tel que cela est particulièrement visible sur la figure 6.

L'invention n'est pas limitée à une courbure particulière de la surface à nettoyer. Celle si peut présenter une forme complexe

Selon l'invention, la rampe de distribution 4 est agencée par rapport à la surface optique 20 de telle manière que, en chaque position de son déplacement entre première et seconde position, elle se situe à l'extérieur du champ de détection 21 du capteur optique 2. Ceci est notamment rendu possible à la fois par la forme particulière de la rampe de distribution 4 et par sa configuration spatiale relative à la surface optique 20, qui sera détaillée ci-après.

Le dispositif de nettoyage 3 comprend également un corps d'acheminement 5 du ou des fluides de nettoyage et/ou de séchage. Le corps d'acheminement 5 présente une forme allongée selon un axe d'allongement X. Selon le mode de réalisation de l'invention plus particulièrement illustré par les figures, le corps d'acheminement 5 présente une forme d'enveloppe générale sensiblement cylindrique d'axe X. A son extrémité amont, le corps d'acheminement 5 est relié à un ensemble d'alimentation en fluides de nettoyage et/ou de séchage, non représenté sur les figures. Cet ensemble d'alimentation comporte, par exemple, un réservoir de stockage de fluides, ainsi qu'une ou plusieurs canalisations reliant de réservoir de stockage au corps d'acheminement 5. A son extrémité aval, le corps d'acheminement 5 est rattaché à la rampe de distribution 4. Plus précisément, selon le mode de réalisation de l'invention plus particulièrement illustré par les figures, le corps d'acheminement 5 est rattaché, à son extrémité aval, à une portion d'extrémité 42 de la rampe de distribution 4 présentant une forme allongée d'axe d'allongement X. En d'autres termes, la rampe de distribution 4 se rattache ici au corps d'acheminement 5 par une portion d'extrémité 42 qui prolonge coaxialement ledit corps d'acheminement 5. Ainsi, à son extrémité amont, la rampe de distribution 4 est rattachée au corps d'acheminement 5 par sa portion d'extrémité 42 et, à son extrémité aval, elle présente une deuxième portion, courbe, 43, dont la courbure est similaire à celle de la portion émettrice 201 de la surface optique 20, portion courbe 43 dans laquelle sont agencés les orifices de distribution 41. Selon l'invention, le déplacement de la rampe de distribution 4 entre sa première position, de repos, et sa seconde position, se fait selon une direction parallèle à celle de l'axe d'allongement X.

Avantageusement la rampe de distribution 4 est rattachée au corps d'acheminement 5 de telle manière que sa portion courbe 43 s'étende de part et d'autre de l'extrémité aval du corps d'acheminement 5 selon une direction transversale à l'axe d'allongement X de celui-ci. Plus précisément, selon le mode de réalisation de l'invention illustré par les figures, cette portion courbe 43 s'étend sensiblement symétriquement, selon une direction transversale Y coupant de façon perpendiculaire l'axe d'allongement X, de part et d'autre de l'extrémité aval du corps d'acheminement 5.

Avantageusement, et comme le montrent les figures 2 à 7, le corps d'acheminement 5 est rattaché à un boîtier 6 de réception notamment du capteur optique 2 du système de détection 1. Plus précisément, selon le mode de réalisation plus particulièrement illustré par les figures, le corps d'acheminement 5 est fixé, par des moyens de fixation 9 appropriés, sur une face d'accueil 60 du boîtier de réception 6. Il est à noter que, selon différents modes de réalisation, le boîtier de réception 6 peut être un boîtier de réception de l'ensemble du système de détection 1 ou du capteur optique 2 seulement. Selon l'invention, la face d'accueil 60 est sensiblement perpendiculaire à la surface optique 20 et s'étend à partir de cette dernière. Selon le mode de réalisation illustré par les figures, cette face d'accueil 60 est également sensiblement perpendiculaire au plan axial de symétrie P1 défini précédemment. Plus précisément, selon ce mode particulier de réalisation, l'arête d'intersection de la face d'accueil 60 avec la surface optique 20 est un bord de la portion émettrice 201, et plus particulièrement le bord 204 opposé au bord commun 203 que cette portion émettrice 201 partage avec la portion réceptrice 202. Selon ce mode de réalisation de l'invention, le corps d'acheminement 5 est agencé sur la face d'accueil 60 de telle manière que son axe d'allongement X se trouve à la fois sensiblement parallèle à la face d'accueil 60 et compris dans le plan axial de symétrie P1 précédemment défini.

Il s'ensuit que, le déplacement de la rampe de distribution 4 entre sa première position, de repos, et sa seconde position s'effectuant selon une direction sensiblement parallèle à celle de l'axe d'allongement X, ce déplacement s'effectue, dans le plan axial de symétrie P1, sensiblement perpendiculairement à la surface optique 20. En d'autres termes, ce déplacement s'effectue parallèlement à l'axe optique du capteur.

Il résulte également de ce qui précède que la rampe de distribution 4, quelle que soit sa position entre sa position de repos et sa seconde position, se trouve située du côté de la face d'accueil 60 du boîtier 6 au regard de la surface optique 20.

Les figures 3 à 5 illustrent le système de détection 1 selon l'invention dans diverses positions de la rampe de distribution 4 au regard de la surface optique 20, c'est-à-dire dans diverses positions de la rampe de distribution au cours de son déplacement entre sa première position, de repos, illustrée par la figure 3, et sa seconde position, de déploiement extrême, illustrée par la figure 5.

Sur ces vues schématiques en coupe selon un plan sensiblement parallèle au plan axial de symétrie P1 précédemment défini apparaît l'ensemble d'injection de fluide de nettoyage et/ou de séchage du dispositif de nettoyage 3. L'ensemble d'injection de fluide du dispositif de nettoyage 3 comporte un canal d'acheminement 50 agencé dans le corps d'acheminement 5 sensiblement coaxialement avec l'axe d'allongement X de celui-ci. Plus précisément, le canal d'acheminement 50 est percé dans une partie mâle 51a apte à coulisser, selon la direction de cet axe d'allongement X, dans une partie femelle 51b dudit corps d'acheminement 5 formant corps du cylindre. La partie mâle 51a, formant piston mobile à l'intérieur du cylindre, est la partie qui est rattachée, à son extrémité aval, à la rampe de distribution 4. Au sein de la rampe de distribution 4, le canal d'acheminement 50 est prolongé sensiblement coaxialement par au moins un canal de répartition 44 qui débouche dans le canal de distribution 40. Vers l'amont, le canal d'acheminement 50 forme le prolongement aval d'un canal d'alimentation 500 de plus grand diamètre, dont il est coaxial d'axe d'allongement X. A leur intersection, le canal d'acheminement 50 et le canal d'alimentation 500 forment un épaulement 52.

L'ensemble d'injection comporte en outre une tige 53, d'axe d'allongement X, autour de laquelle la partie mâle formant piston 51a est configurée pour coulisser. La tige 53 est équipée d'un joint périphérique 54, par exemple un joint torique, qui rend étanche le coulissement du piston autour de la tige. Le piston et/ou la tige sont munis de rainures qui permettent le passage de fluide depuis une chambre d'admission disposée en amont de la partie mâle vers le canal d'alimentation, dès lors que la position relative de la tige par rapport au piston permet au fluide de ne plus être bloqué par le joint en passant par les rainures.

L'ensemble d'injection de fluide du dispositif de nettoyage du système de détection 1 selon l'invention fonctionne de la manière suivante.

Lorsque la rampe de distribution est dans sa première position, ou position de repos, illustrée par les figures 2 et 3, la position relative de la tige 53 par rapport au piston mobile 51a est telle que la tige 53 et le joint périphérique 54 obturent le canal d'alimentation 500: aucun fluide ne peut donc circuler au travers de ce canal d'alimentation 500 jusqu'au canal d'acheminement 50 et, via le canal de répartition 44, jusqu'au canal de distribution 40 agencé dans la rampe de distribution 4. Aucun fluide n'est donc projeté vers la surface optique 20.

Dans cette première position, ou position de repos, la rampe de distribution 4 est agencée par rapport au corps d'acheminement 5 et à la surface optique 20 de telle manière que sa portion courbe 43 forme, avec ladite surface optique 20, une surface sensiblement continue. Plus précisément, dans cette première position, la portion courbe 43 de la rampe de distribution 4, située du côté de la face d'accueil 60 du boîtier 6 au regard de la surface optique 20 comme il a été évoqué précédemment, se trouve située au voisinage de la portion émettrice 201 de cette surface optique 20, au voisinage de celle-ci pour former avec elle une surface sensiblement continue.

La figure 4 illustre le système de détection 1 selon l'invention dans une position de la rampe de distribution 4 intermédiaire entre sa première position et sa seconde position. Dans cette position intermédiaire, le fluide injecté dans le corps d'acheminement pousse la partie mâle 51a du corps d'acheminement 5, à l'encontre de l'effort de rappel d'un ressort logé dans le corps d'acheminement, sensiblement parallèlement à l'axe d'allongement X, selon la direction représentée par la flèche F sur la figure 4. Ce mouvement entraîne un coulissement relatif de la tige 53 par rapport à cette partie mâle 51a. Toutefois, dans cette position intermédiaire, le joint périphérique 54 continue à obturer l'accès au canal d'alimentation 500 pour le fluide, ce joint étant toujours disposé en aval de l'extrémité des rainures formées entre le piston et la tige.

En coulissant vers l'aval, la partie mâle 51a du corps d'acheminement 5 entraîne la rampe de distribution 4 à coulisser dans la même direction, c'est-à-dire en s'éloignant de la surface optique 20. Comme le montre la figure 4, l'agencement de la rampe de distribution, du côté de la face d'accueil 60, est réalisé de telle manière que cette rampe de distribution reste à l'extérieur du champ de détection 21 du capteur optique 2.

Ce déplacement se poursuit tant que du fluide est injecté dans le corps d'acheminement ou, selon des variantes particulières de réalisation, jusqu'à ce que la rampe de distribution 4 ou la partie mâle 51 du corps d'acheminement 5 atteigne une butée mécanique préalablement agencée par exemple sur la face d'accueil 60 du boîtier de réception 6. Cette position extrême représente ici la seconde position de la rampe de distribution 4 illustrée sur la figure 5, dans laquelle la rampe de distribution 4 est entièrement déployée par rapport à la surface optique 20, au plus loin de cette dernière. Cette seconde position est plus particulièrement illustrée par les figures 5 et 7. Il est à noter que la rampe de distribution 4 est, là encore, configurée de telle manière qu'elle reste à l'extérieur du champ de détection 21 du capteur optique 2.

L'invention permet ainsi de réaliser un nettoyage performant de la surface optique 20 du capteur optique 2, sans que la rampe de distribution 4 par laquelle le ou les fluides de nettoyage et/ou de séchage sont projetés sur cette surface optique 20 ne se trouve jamais dans le champ de détection 21 du capteur optique 2. Ceci permet en particulier de réaliser des opérations de nettoyage alors que le véhicule roule et le système de détection associé est en marche.

Le fait que la rampe de distribution ne se retrouve pas dans le champ de détection du capteur optique est rendu possible, d'une part, par la forme même de la rampe de distribution et, d'autre part, par son agencement particulier du côté de la face d'accueil 60 du boîtier de réception 6, agencement grâce auquel le déplacement de ladite rampe de distribution 4 entre sa première position, de repos, et sa seconde position, entièrement déployée au regard de la surface optique 20, se fait selon une direction sensiblement perpendiculaire à celle de cette surface optique 20, dans le plan de symétrie axiale. De façon alternative, l'ensemble d'injection de fluide du dispositif de nettoyage 3 est configuré de telle manière que l'injection de fluide dans la rampe de distribution 4 et, donc, la projection de fluide sur la surface optique 20, n'est pas limitée à un intervalle entre une position intermédiaire et la deuxième position mais est autorisée sensiblement dès lors que la rampe de distribution 4 quitte sa première position, ou position de repos.

L'invention ne saurait toutefois se limiter aux moyens et configurations décrits et illustrées, et elle s'applique également à tous moyens ou configurations équivalents et à toute combinaison de tels moyens. En particulier, si l'invention a été décrite ici dans un mode de réalisation dans lequel la géométrie générale du corps d'acheminement 5 est une géométrie cylindrique, il va de soi que l'invention s'applique à tout type de géométrie et de formes, dans la mesure où les éléments réalisant les différentes fonctionnalités décrites ici sont présents. De même, si l'invention est ici décrite dans un mode de réalisation dans lequel le corps d'acheminement 5 est fixé sur la face d'accueil 60 du boîtier de réception 6 et directement rattaché à la rampe de distribution 4, elle s'applique plus généralement au cas où le corps d'acheminement 5 est situé dans une position relative stable par rapport à la surface optique 2 et relié, par des moyens appropriés, à la rampe de distribution 4 configurée comme décrit dans le présent document.

Par ailleurs, si l'invention a été décrite ici selon un mode de réalisation dans lequel la distribution de fluide est autorisée dès lors que la rampe de distribution 4 quitte sa première position, ou position de repos, il est tout à fait envisageable, sans que cela nuise à l'invention, que la distribution de fluide soit autorisée dès lors que la rampe de distribution 4 atteint, par rapport à la surface optique 20, une position prédéfinie de démarrage. De même, l'invention s'applique aux modes de réalisation dans lesquels la distribution de fluide se fait de manière continue lors du déplacement de la rampe de distribution 4 relativement à la surface optique comme aux modes de réalisation dans lesquels la distribution de fluide est autorisée pour un certain nombre de positions relatives, prédéfinies, de la rampe de distribution 4 par rapport à la surface optique.

Enfin, si l'ensemble d'injection de fluide décrit dans le présent document permet d'atteindre les fonctionnalités souhaitées dans un encombrement minimal, l'invention s'applique à tout type d'ensemble d'injection de fluide dans la mesure où il permet d'atteindre les fonctionnalités souhaitées et décrites dans le présent document pour le dispositif de nettoyage.

## Revendications

1. Système de détection (1) destiné à équiper un véhicule automobile, le système de détection (1) comprenant au moins un capteur optique (2) délimité par au moins une surface optique (20) dont la forme et l'orientation définissent un champ de détection (21) du capteur optique (2), et au moins un dispositif de nettoyage (3) de cette surface optique (20), dans lequel le dispositif de nettoyage (3) comporte une rampe de distribution (4) d'au moins un fluide de nettoyage et/ou de séchage, ladite rampe de distribution (4) étant mobile, par rapport à la surface optique (20), entre une première position dite de repos dans laquelle elle ne distribue aucun fluide et une seconde position dite de déploiement extrême, **caractérisé en ce que**, en chaque position de son déplacement entre la première et la seconde position, la rampe de distribution (4) se situe à l'extérieur du champ de détection (21) du capteur optique (2).

2. Système de détection (1) selon la revendication 1, **caractérisé en ce que** la rampe de distribution (4) présente une pluralité d'orifices de distribution (40) de fluide.

3. Système de détection (1) selon l'une des revendications précédentes, **caractérisé en ce qu'**entre la première et la seconde position, la rampe de distribution (4) se déplace sensiblement perpendiculairement à la surface optique (20), notamment en s'éloignant de cette dernière.

4. Système de détection (1) selon l'une des revendications précédentes, dans lequel la surface optique (20) du capteur optique (2) est courbe, **caractérisé en ce que** la rampe de distribution (4) est courbe.

5. Système de détection (1) selon la revendication 4, **caractérisé en ce que** la courbure (C') de la rampe de distribution (4) est égale à la courbure (C) de la surface optique (20).

6. Système de détection selon l'une des deux revendications précédentes, **caractérisé en ce que** la rampe de distribution (4) est disposée sur un côté (60) d'un boîtier de réception (6) du capteur optique (2) disposé dans un plan parallèle au plan dans lequel s'inscrit la courbure (C') de la rampe de distribution (4).

7. Système de détection (1) selon l'une quelconque des revendications précédentes, **caractérisé en ce que**, dans sa première position, dite de repos, la rampe de distribution (4) forme, avec la surface optique (20), une surface sensiblement continue.

8. Système de détection (1) selon l'une quelconque des revendications précédentes, **caractérisé en ce que** la rampe de distribution (4) est reliée à un corps d'acheminement (5) fixé sur un boîtier (6) du capteur optique (2).

9. Système de détection (1) selon la revendication précédente, **caractérisé en ce que** le corps d'acheminement (5) présente une position relative stable par rapport à la surface optique (20).

10. Système de détection (1) selon l'une quelconque des revendications précédentes, **caractérisé en ce que** la surface optique (20) comporte au moins une portion émettrice (201) et/ou une portion réceptrice (202).

11. Système de détection (1) selon l'une des revendications 8 ou 9, **caractérisé en ce que** la surface optique (20) comporte une portion émettrice (201) et une portion réceptrice (202), et **en ce que** le corps d'acheminement (5) est fixé sur une face de réception (60) du boîtier (6) qui s'étend à partir d'un bord (204) de la portion émettrice (201).

12. Système de détection (1) selon l'une des deux revendications précédentes, **caractérisé en ce que** la rampe de distribution (4), dans sa première position, est située au voisinage de l'au moins une portion émettrice (201).

## Patentansprüche

1. Detektionssystem (1) zur Ausrüstung eines Kraftfahrzeugs, wobei das Detektionssystem (1) mindestens einen optischen Sensor (2), der durch mindestens eine optische Fläche (20) begrenzt wird, deren Form und Ausrichtung ein Detektionsfeld (21) des optischen Sensors (2) definieren, und mindestens eine Reinigungsvorrichtung (3) zum Reinigen dieser optischen Fläche (20) umfasst, wobei die Reinigungsvorrichtung (3) eine Verteilerleiste (4) zum Verteilen mindestens einer Reinigungs- und/oder Trocknungsflüssigkeit beinhaltet, wobei die Verteilerleiste (4) in Bezug auf die optische Fläche (20) zwischen einer ersten Position, Ruheposition genannt, in der sie keine Flüssigkeit verteilt, und einer zweiten Position, ganz ausgefahrene Position genannt, bewegbar ist, **dadurch gekennzeichnet, dass** die Verteilerleiste (4) in jeder Position ihrer Bewegung zwischen der ersten und der zweiten Position außerhalb des Detektionsfelds (21) des optischen Sensors (2) gelegen ist.

2. Detektionssystem (1) nach Anspruch 1, **dadurch gekennzeichnet, dass** die Verteilerleiste (4) eine Mehrzahl von Flüssigkeitsverteilöffnungen (40) aufweist.

3. Detektionssystem (1) nach einem der vorhergehenden Ansprüche, **dadurch gekennzeichnet, dass** sich die Verteilerleiste (4) zwischen der ersten und der zweiten Position im Wesentlichen senkrecht zu der optischen Fläche (20) bewegt, wobei sie sich von Letzterer insbesondere entfernt.

4. Detektionssystem (1) nach einem der vorhergehenden Ansprüche, bei dem die optische Fläche (20) des optischen Sensors (2) gekrümmt ist, **dadurch gekennzeichnet, dass** die Verteilerleiste (4) gekrümmt ist.

5. Detektionssystem (1) nach Anspruch 4, **dadurch gekennzeichnet, dass** die Krümmung (C') der Verteilerleiste (4) gleich der Krümmung (C) der optischen Fläche (20) ist.

6. Detektionssystem nach einem der beiden vorhergehenden Ansprüche, **dadurch gekennzeichnet, dass** die Verteilerleiste (4) an einer Seitenfläche (60) eines Aufnahmegehäuses (6) zum Aufnehmen des optischen Sensors (2) angeordnet ist, die in einer Ebene angeordnet ist, die parallel zu der Ebene ist, in welche die Krümmung (C') der Verteilerleiste (4) einbeschrieben ist.

7. Detektionssystem (1) nach einem der vorhergehenden Ansprüche, **dadurch gekennzeichnet, dass** die Verteilerleiste (4) in ihrer ersten Position, Ruheposition genannt, mit der optischen Fläche (20) eine im Wesentlichen durchgehende Fläche bildet.

8. Detektionssystem (1) nach einem der vorhergehenden Ansprüche, **dadurch gekennzeichnet, dass** die Verteilerleiste (4) mit einem Transportkörper (5) verbunden ist, der an einem Gehäuse (6) des optischen Sensors (2) befestigt ist.

9. Detektionssystem (1) nach dem vorhergehenden Anspruch, **dadurch gekennzeichnet, dass** der Transportkörper (5) eine in Bezug auf die optische Fläche (20) stabile relative Position aufweist.

10. Detektionssystem (1) nach einem der vorhergehenden Ansprüche, **dadurch gekennzeichnet, dass** die optische Fläche (20) mindestens einen emittierenden Abschnitt (201) und/oder einen empfangenden Abschnitt (202) beinhaltet.

11. Detektionssystem (1) nach einem der Ansprüche 8 oder 9, **dadurch gekennzeichnet, dass** die optische Fläche (20) einen emittierenden Abschnitt (201) und einen empfangenden Abschnitt (202) beinhaltet und dass der Transportkörper (5) an einer Aufnahmeseite (60) des Gehäuses (6) befestigt ist, die sich von einem Rand (204) des emittierenden Abschnitts (201) aus erstreckt.

12. Detektionssystem (1) nach einem der vorhergehenden Ansprüche, **dadurch gekennzeichnet, dass** die Verteilerleiste (4) in ihrer ersten Position in der Nähe des mindestens einen emittierenden Abschnitts (201) gelegen ist.

## Claims

1. A detection system (1) designed to be fitted to a motor vehicle, the detection system (1) having at least one optical sensor (2) delimited by at least one optical surface (20) of which the shape and orientation define a detection field (21) of the optical sensor (2), and at least one cleaning device (3) for this optical surface (20), in which the cleaning device (3) has a delivery manifold (4) for delivering at least one cleaning and/or drying fluid, said delivery manifold (4) being movable, relative to the optical surface (20), between a first or idle position in which it does not deliver any fluid and a second position called end deployed, **characterized in that** the delivery manifold (4) is outside the detection field (21) of the optical sensor (2) in all of the positions of the delivery manifold between the first and second positions.

2. The detection system (1) as claimed in claim 1, **characterized in that** the delivery manifold (4) has a plurality of fluid delivery orifices (40).

3. The detection system (1) as claimed in one of the preceding claims, **characterized in that** the delivery manifold (4) moves substantially perpendicular to the optical surface (20), notably away from this latter, between the first and second positions.

4. The detection system (1) as claimed in one of the preceding claims, in which the optical surface (20) of the optical sensor (2) is curved, **characterized in that** the delivery manifold (4) is curved.

5. The detection system (1) as claimed in claim 4, **characterized in that** the curvature (C') of the delivery manifold (4) is equal to the curvature (C) of the optical surface (20) .

6. The detection system as claimed in one of the two preceding claims, **characterized in that** the delivery manifold (4) is arranged on one side (60) of a housing (6) for the optical sensor (2) arranged in a plane parallel to the plane containing the curvature (C') of the delivery manifold (4).

7. The detection system (1) as claimed in any one of the preceding claims, **characterized in that**, in the first position thereof, referred to as the idle position, the delivery manifold (4) forms a substantially continuous surface with the optical surface (20).

8. The detection system (1) as claimed in any one of the preceding claims, **characterized in that** the delivery manifold (4) is linked to a conveyance member (5) attached to a housing (6) of the optical sensor (2).

9. The detection system (1) as claimed in the preceding claim, **characterized in that** the position of the conveyance member (5) is stable relative to the optical surface (20).

10. The detection system (1) as claimed in any one of the preceding claims, **characterized in that** the optical surface (20) has at least one emitter portion (201) and/or one receiver portion (202).

11. The detection system (1) as claimed in one of claims 8 or 9, **characterized in that** the optical surface (20) has an emitter portion (201) and a receiver portion (202) and **in that** the conveyance member (5) is attached to a receiving face (60) of the housing (6) that extends from an edge (204) of the emitter portion (201).

12. The detection system (1) as claimed in one of the two preceding claims, **characterized in that** the delivery manifold (4), when in the first position, is positioned close to at least one emitter portion (201).
